# EUROPÄISCHE PATENTSCHRIFT

(11) **EP 1 273 392 B1**
(45) Veröffentlichungstag und Bekanntmachung des Hinweises auf die Patenterteilung: **11.10.2006**
(21) Anmeldenummer: 01116299.7
(22) Anmeldetag: 05.07.2001
(51) Int. Cl.: B24B 49/12, G01D 5/34

(54) **Verfahren und Vorrichtung zur automatischen Kompensation von Ungenauigkeiten an Schleifmaschinen**
Method and apparatus for automatic compensation of inaccuracies on grinding machines
Procédé et dispositif pour la compensation automatique d'imprécisions sur des rectifieuses

(43) Veröffentlichungstag der Anmeldung: 08.01.2003
(73) Patentinhaber: WENDT GmbH, D-40670 Meerbusch (DE)
(72) Erfinder: Lamers, Norbert, 47445 Moers (DE)
(74) Vertreter: DR. STARK & PARTNER

(56) Entgegenhaltungen:
- DE-A- 4 030 185

## Beschreibung

Die Erfindung betrifft ein Verfahren und eine Vorrichtung zur automatischen Detektion und/oder Kompensation von Lage-, Größen- und Formungenauigkeiten eines symmetrischen und/oder eine bekannte Geometrie aufweisenden Schleifwerkzeuges und eines Werkstückes auf einer CNC-gesteuerten Schleifmaschine, gemäß den Oberbegriffen der Ansprüche 1 und 7. Solch ein Verfahren und Vorrichtung sind aus der DE 4030185 offenlegungschrift bekannt.

Unter Formabweichungen sind hierbei vor allem Rundlauffehler des üblicherweise als Schleifscheibe ausgebildeten Schleifwerkzeuges und des Werkstückes zu verstehen. Aber bei entsprechender Ausprägung des Verfahrens ist auch eine Bestimmung des Planschlages des Schleifwerkzeuges möglich.

Aus der Praxis ist es bekannt, mit einem mechanischen Detektionskopf, der in Längsrichtung verlagerbare Detektionseinrichtungen mit jeweils schräger Oberfläche aufweist, Lageungenauigkeiten oder dergleichen eines Schleifwerkzeuges zu bestimmen und zu kompensieren.

Dabei wird das Schleifwerkzeug bis zum Kontakt mit beiden Detektionseinrichtungen auf diese zubewegt und drückt diese zumindest teilweise ein Stück ein. Die Detektionseinrichtungen werden in dieser Position arretiert und die als Abtaster ausgebildete Messeinrichtung nimmt diese Form ab. Es kann dann aus dem Höhenunterschied der Detektionseinrichtungen in Abhängigkeit von dem Winkel der schrägen Oberfläche die Mitte des Schleifwerkzeuges ermittelt werden.

Nachteilig hierbei ist, dass zum einen eine sehr aufwendige Apparatur erforderlich ist und zum anderen diese aufgrund ihrer mechanischen Funktionalität sehr empfindlich ist und mit geringen Toleranzen für die gewünschte Genauigkeit gefertigt werden muss. Durch mechanische Beanspruchung während der Benutzung kann sich diese Apparatur verstellen und es ist eine entsprechende Nachjustage erforderlich.

Aufgabe der Erfindung ist es, die vorgenannten Nachteile zu vermeiden und ein Verfahren und Vorrichtung zur automatischen Detektion und/oder Kompensation von Lageungenauigkeiten oder dergleichen eines Schleifwerkzeuges und eines symmetrischen und/oder eine bekannte Geometrie aufweisenden Werkstückes auf einer CNC-gesteuerten Schleifmaschine anzugeben, das auch ohne hohen mechanischen Aufwand die erforderliche Genauigkeit bietet.

Diese Aufgabe wird gelöst durch ein Verfahren zur automatischen Detektion und/oder Kompensation von Lage-, Größenund Formungenauigkeiten eines symmetrischen und/oder eine bekannte Geometrie aufweisenden Schleifwerkzeuges und eines Werkstückes auf einer CNC-gesteuerten Schleifmaschine gemäß Anspruch 1 und eine Vorrichtung gemäß Anspruch 7. Hierdurch werden einerseits mechanische Verschleißeffekte oder Dejustagen durch mechanische Einwirkung vermieden und andererseits sind auch Messungen am rotierenden Werkzeug möglich.

Vorzugsweise kann eine parallel zur Rotationsachse des Schleifwerkzeuges ausgerichtete Teilstrecke des Laserstrahls vorgesehen sein, so dass durch entsprechendes Verfahren in diese Teilstrecke auch der Radius bzw. Durchmesser des Schleifwerkzeuges durch Detektion einer Laserstrahlunterbrechung bestimmt werden kann. Auch kann hierdurch mittels Messen bei verschiedenen Drehwinkeln der jeweiligen Achsen ein Rundlauffehler genau ermittelt werden. Dabei kann die parallel zur Achse des Schleifwerkzeuges ausgerichtete Teilstrecke sowohl mittig zwischen den winklig angeordenten Laserstrahlenstrecken vorgesehen sein, sie kann aber auch an einer Seite angeordnet sein.

Erfindungsgemäß können die zwei winklig angeordneten Laserstrahlenstrecken von einem durch Spiegel oder Strahlteiler im Detektionsbereich V-förmig bzw. V-Stumpf-förmig umgelenkten einzigen Laserstrahl gebildet werden, so dass nur eine einzige Laserstrahlquelle erforderlich ist, und somit die Herstellkosten als auch die Betriebs- und Unterhalts- sowie Wartungskosten gering gehalten werden.

Dabei kann für jede Teilstrecke des Laserstrahls ein eigener Laserstrahldetektor eine Unterbrechung des Laserstrahls in diesem Bereich detektieren, so dass die Stelle der Unterbrechung durch Zuordnung zu einer bestimmten Teilstrecke des Laserstrahls lokalisiert werden kann. Hierbei ist durch geeignete Maßnahmen, z. B. Strahlleiter oder dergleichen zu gewährleisten, dass der Laserstrahl aus Richtung der Strahlquelle gesehen in den hinter der Unterbrechung liegenden Teilstrecken unbeeinträchtigt bleibt.

Auch kann ein durchgehender Laserstrahl mit nur einem Laserstrahldetektor zur Detektion in allen Teilstrecken des Laserstrahls verwendet werden, und es kann die unterbrochene Teilstrecke in Abhängigkeit von der zur Unterbrechung führenden Bewegung und der Bewegungsrichtung ermittelt werden, so dass mit einem geringen apparativen Aufwand eine Detektion und/oder Kompensation der eingangs genannten Ungenauigkeiten erfolgen kann.

Hierbei wird durch entsprechendes Verfahren der Messeinrichtung einerseits bis in die jeweilige Teilstrecke des Laserstrahls und andererseits an einen Punkt des Werkstücks und die Verfahrdaten aus der CNC-Steuerung eine Verknüpfung der erfassten Detektiondaten erreicht.

Vorzugsweise kann zur Kompensation eventueller Unrundheiten und/oder eines Plan- bzw. Höhenschlages des Schleifwerkzeuges während der Detektion das Schleifwerkzeug mit ausreichend hoher Geschwindigkeit rotieren, so dass quasi zeitgleich die gesamte Umfangs- oder Seitenfläche erfasst wird und somit immer der am weitesten vorstehende Punkt detektiert werden kann.

Aus der Praxis ist ein mechanischer Detektionskopf zur Detektion und/oder Kompensation von Lageungenauigkeiten oder dergleichen bekannt, der in Längsrichtung verlagerbare Detektionseinrichtungen mit jeweils schräger Oberfläche aufweist.

Nachteilig hierbei ist, dass zur Erzielung der erforderlichen hohen Genauigkeit entsprechend eng tolerierte Bauteile benötigt werden und durch die hohe mechanische Genauigkeit die Vorrichtung empfindlich gegenüber Dejustage, Verschmutzung und dergleichen ist.

Erfindungsgemäß kann eine parallel zur Achse des Schleifwerkzeuges ausgerichtete Teilstrecke des Laserstrahls vorgesehen sein, so dass auch eine Bestimmung des Radius bzw. Durchmesser des Schleifwerkzeuges durch Verfahren und Detektion einer Laserstrahlunterbrechung möglich ist.

Bei einem bevorzugten Ausführungsbeispiel der Erfindung können die zwei winklig angeordneten Laserstrahlstrecken Teilstrecken eines durch Spiegel oder Strahlteiler im Detektionsbereich V-förmig bzw. V-Stumpf-förmig umgelenkten Laserstrahls sein, so dass sowohl die Herstellung als auch der Unterhalt durch die Reduzierung auf lediglich eine Laserstrahlquelle gering gehalten werden können.

Dabei kann jede Teilstrecke einen eigenen Laserstrahldetektor zur Detektion einer Unterbrechung des Laserstrahls in diesem Bereich aufweisen, so dass die Stelle der Unterbrechung durch Zuordnung zu einer bestimmten Teilstrecke lokalisierbar ist. Durch geeignete Maßnahmen, z. B. Strahlteiler oder dergleichen ist dabei zu gewährleisten, dass der Laserstrahl aus Richtung der Strahlquelle gesehen in den hinter der Unterbrechung liegenden Teilstrecken unbeeinträchtigt bleibt.

Auch kann der Laserstrahl zur Detektion in allen Teilstrecken durchgehend ausgebildet sein und nur ein Laserstrahldetektor vorgesehen sein, so dass der Bauteileaufwand und damit auch die Herstellkosten reduziert werden.

Hierbei wird durch entsprechendes Verfahren der Messeinrichtung einerseits bis in die jeweilige Teilstrecke des Laserstrahls und andererseits an einen Punkt des Werkstücks und die Verfahrdaten aus der CNC-Steuerung eine Verknüpfung der erfassten Detektiondaten erreicht.

Im Folgenden wird ein in der Zeichnung dargestelltes Ausführungsbeispiel der Erfindung erläutert. Es zeigen:
- Fig. 1: eine Draufsicht auf ein erstes Ausführungsbeispiel einer erfindungsgemäßen Vorrichtung,
- Fig. 2: den Gegenstand nach Fig. 1 bei einem ersten Verfahrensschritt,
- Fig. 3: den Gegenstand nach Fig. 1 bei einem nachfolgenden Verfahrensschritt,
- Fig. 4: den Gegenstand nach Fig. 1 bei einem späteren Verfahrensschritt,
- Fig. 5: ein zweites Ausführungsbeispiel einer erfindungsgemäßen Vorrichtung.

In allen Figuren werden für gleiche bzw. gleichartige Bauteile übereinstimmende Bezugszeichen verwendet.

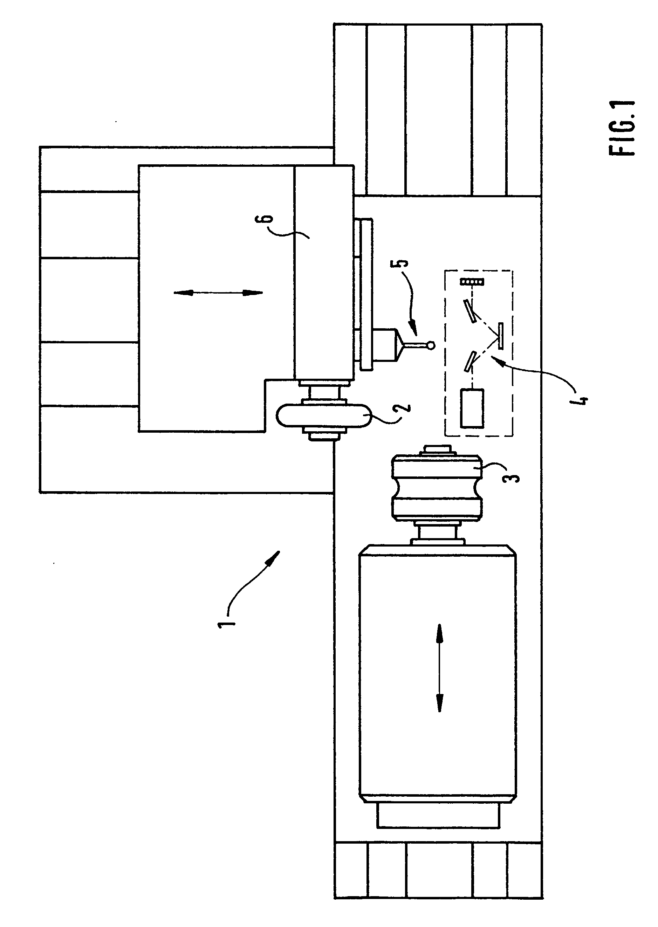

Fig. 1 zeigt eine CNC-gesteuerte Schleifmaschine 1 mit einem als Schleifscheibe ausgebildeten Schleifwerkzeug 2 und einem Drahtwalzring als Werkstück 3. Weiterhin ist ein Detektionskopf 4 sowie eine Messeinrichtung 5 vorgesehen. Für den eigentlichen Schleifvorgang wird das an einer Schleifstockspindel 6 angeordnete und rotierende Schleifwerkzeug 2 mit dem ebenfalls rotierenden oder aber sich zumindest langsam drehenden Werkstück 3 in Eingriff gebracht.

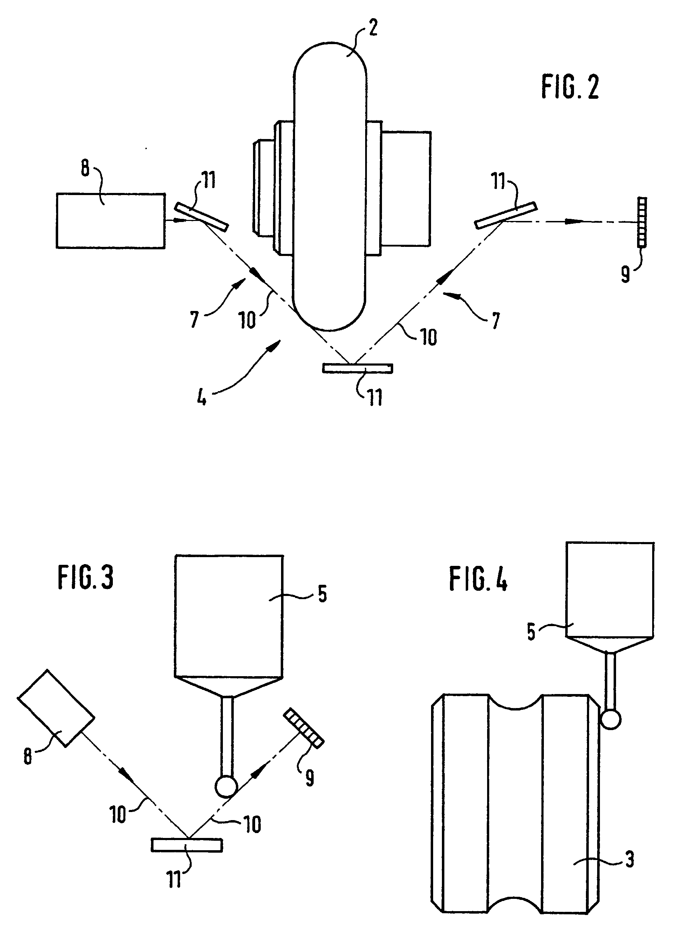

Fig. 2 zeigt ausschnittsweise in einer vergrößerten Darstellung den Detektionskopf 4 und das Schleifwerkzeug 2. Der Detektionskopf 4 besteht dabei aus Detektionseinrichtungen 7, die als ein zwischen einer Laserstrahlquelle 8 und einem Laserstrahldetektor 9 aufgebaute und in entsprechend schräger Ausrichtung geleitete Laserstrahlen 10 ausgebildet sind. Die jeweiligen Teilstrecken des Laserstrahls 10 werden dabei durch Spiegel 11 entsprechend umlenkt.

Bei dem erfindungsgemäßen Verfahren wird das Schleifwerkzeug 2 durch Relativbewegung zu dem Laserstrahl 10 mit diesem in Eingriff gebracht, wodurch der Laserstrahl 10 unterbrochen wird und der Laserstrahldetektor 9 dies detektiert. Dabei kann entweder das Schleifwerkzeug 2 oder aber der Detektionskopf 4 mit den Laserstrahlen 10 verfahren werden. Es ist auch möglich, dass sowohl Schleifwerkzeug 2 als auch Detektionskopf 4 verfahren werden. Vorzugsweise kann dabei die Relativbewegung parallel zur Ausrichtung einer Teilstrecke des Laserstrahls 10 erfolgen, so dass die Unterbrechung zwangsläufig nur in dem anderen Teilstück des Laserstrahls 10 erfolgen kann.

Sobald eine Unterbrechung des Laserstrahls 10 detektiert wird, erfolgt ein Verfahren parallel zur Rotationsachse des Schleifwerkzeuges 2 solange, bis der Laserstrahl 10 erneut unterbrochen wird. Dies ist dann zwangsläufig in der anderen Teilstrecke des Laserstrahls 10. Somit kann die Schleifwerkzeugmitte bei einem symmetrischen Schleifwerkzeug 2 eindeutig der Hälfte des Verfahrweges zugeordnet werden. Bei nicht symmetrischem Schleifwerkzeug 2, dessen Geometrie jedoch bekannt ist, kann auf diese Art und Weise ebenfalls ein bestimmter Punkt des Schleifwerkzeuges 2 berechnet werden.

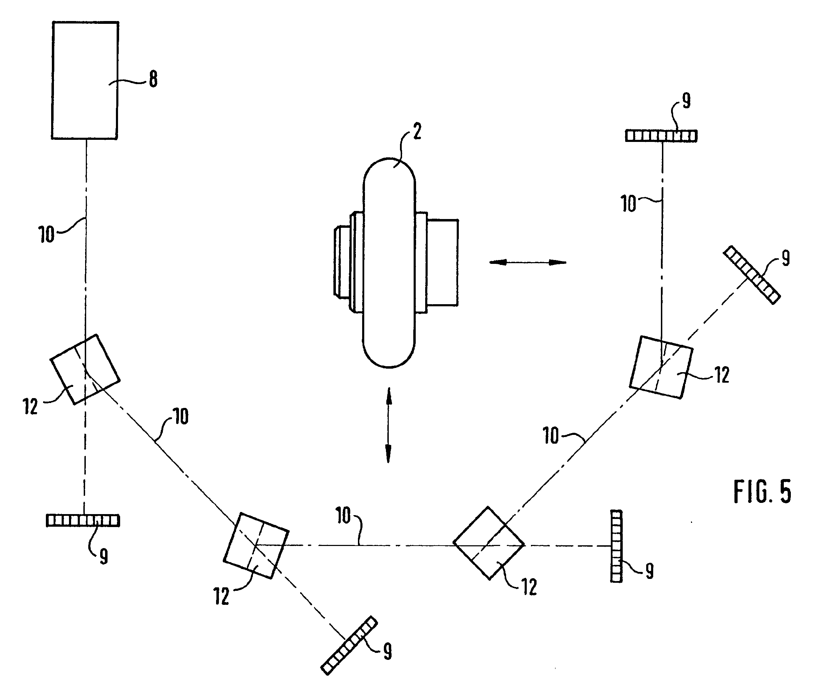

Wie in Fig. 3 dargestellt, wird die als Abtaster ausgebildeten Messeinrichtung 5 entsprechend verfahren und die somit herausgefundene Mitte des symmetrischen Schleifwerkzeuges 2 bzw. der bestimmte Punkt eines unsymmetrischen Schleifwerkzeuges 2 mit bekannter Geometrie, wird durch Anfahren zumindest eines Referenzpunktes, insbesondere einer Seitenkante des Werkstückes 3 oder dessen Umfangsfläche zur Steuerung des Schleifwerkzeuges gemäß Fig. 4 übertragen. Die entsprechenden Daten werden u. a. unter Berücksichtigung der Verfahrwerte aus der CNC-Steuerung ermittelt. Somit kann auf einfache und berührungslose, und insofern auch verschleißfreie Art und Weise die relative Lage der Umfangs- und Seitenflächen von Werkzeug und Werkstück zueinander ermittelt werden. Demzufolge ist das Verfahren auch bei rotierendem Schleifwerkzeug 2 einsetzbar.

Fig. 5 zeigt ausschnittweise ein weiteres Ausführungsbeispiel der Erfindung, wobei der Laserstrahl 10 sowohl einen rechtwinklig zur Rotationsachse des Schleifwerkzeuges 2 ausgebildete Teilstrecke als auch zwei parallel zur Rotationsachse des Schleifwerkzeuges 2 ausgerichtete Teilstrecken aufweist. Um eine Erfassung auch bei nicht auf die Ausrichtung der Teilstrecken des Laserstrahls 10 ausgerichteten Verfahrwegen zu ermöglichen, hat jede Teilstrecke des Laserstrahls 10 einen eigenen Laserstrahldetektor und statt Spiegel 11 sind Strahlteiler 12 vorgesehen, so dass auch zur separaten Erfassung aller Teilstrekken des Laserstrahls 10 nur eine Laserstrahlquelle 8 benötigt wird.

## Patentansprüche

1. Verfahren zur automatischen Detektion und/oder Kompensation von Lage-, Größen- und Formungenauigkeiten eines symmetrischen und/oder eine bekannte Geometrie aufweisenden Schleifwerkzeuges (2) und eines Werkstückes (3) auf einer CNC-gesteuerten Schleifmaschine (1), mit einem mit der CNC-Steuerung verbundenen Detektionskopf (4) und einer Messeinrichtung (5), wobei der Detektionskopf (4) zwei schräg ausgerichtete und einen in etwa dreiecksförmigen Bereich einschließende Detektionseinrichtungen (7) aufweist und zur Detektion des Schleifwerkzeuges (2) der Detektionskopf (4) den Kontakt mit zumindest einer Detektionseinrichtung (7) detektiert und durch Verfahren der Messeinrichtung (5) zwischen Werkstück (3) und Detektionskopf (4) der relative Abstand zwischen Schleifwerkzeug (2) und Werkstück (3) ermittelt wird, **dadurch gekennzeichnet, dass** zur Detektion des Schleifwerkzeuges (2) der Detektionskopf (4) an das Schleifwerkzeug (3) und/oder das Schleifwerkzeug (3) an den Detektionskopf (4) herangefahren wird und die Detektionseinrichtungen (7) zur Detektion wenigstens einen zwischen einer Laserstrahlquelle (8) und einem Laserstrahldetektor (9) aufgebauten und in entsprechend schräger Ausrichtung geleiteten Laserstrahl (10) verwenden und eine Unterbrechung des Laserstrahls (10) durch das Werkstück (3) von dem Laserstrahldetektor (9) detektiert und an die CNC-Steuerung weitergegeben wird.

2. Verfahren nach Anspruch 1, **dadurch gekennzeichnet, dass** eine parallel zur Rotationsachse des Schleifwerkzeuges (2) ausgerichtete Teilstrecke des Laserstrahls (10) vorgesehen ist.

3. Verfahren nach Anspruch 1 oder 2, **dadurch gekennzeichnet, dass** die zwei winklig angeordneten Laserstrahlenstrecken von einem durch Spiegel (11) oder Strahlteiler (12) im Detektionsbereich V-förmig bzw. V-Stumpf-förmig umgelenkten einzigen Laserstrahl (10) gebildet werden.

4. Verfahren nach einem der Ansprüche 1 bis 3, **dadurch gekennzeichnet, dass** für jede Teilstrecke des Laserstrahls 10) ein eigener Laserstrahldetektor (9) eine Unterbrechung des Laserstrahls (10) in diesem Bereich detektiert.

5. Verfahren nach Anspruch 3, **dadurch gekennzeichnet, dass** ein durchgehender Laserstrahl (10) mit nur einem Laserstrahldetektor (9) zur Detektion in allen Teilstrecken des Laserstrahls verwendet wird und die unterbrochene Teilstrecke in Abhängigkeit von der zur Unterbrechung führenden Bewegung und der Bewegungsrichtung ermittelt wird.

6. Verfahren nach einem der Ansprüche 1 bis 5, **dadurch gekennzeichnet, dass** zur Kompensation eventueller Unrundheiten und/oder eines Plan- bzw. Höhenschlages des Schleifwerkzeuges (2) während der Detektion das Schleifwerkzeug (2) mit ausreichend hoher Geschwindigkeit rotiert.

7. Vorrichtung zur automatischen Detektion und/oder Kompensation von Lage-, Größen- und Formungenauigkeiten eines symmetrischen und/oder eine bekannte Geometrie aufweisenden Schleifwerkzeuges (2) und eines Werkstückes (3) auf einer CNC-gesteuerten Schleifmaschine (1), mit einem schaltenden Detektionskopf (4), dessen Ausgang mit der CNC-Steuerung verbunden ist und einer Messeinrichtung (5), wobei der Detektionskopf zwei schräg ausgerichtete und einen in etwa dreiecksförmigen Bereich einschließende Detektionseinrichtungen (7) aufweist und zur Detektion eines Kontaktes mit dem Schleifwerkzeug (2) ausgebildet ist und die Messeinrichtung (5) zur Ermittlung des relativen Abstands zwischen Schleifwerkzeug (5) und Werkstück (3) verfahrbar ausgebildet ist, insbesondere zur Durchführung des Verfahrens nach den Ansprüchen 1 bis 6, **dadurch gekennzeichnet, dass** die Detektionseinrichtungen (7) zur Detektion einen zwischen einer Laserstrahlquelle (8) und einem Laserstrahldetektor (9) aufgebauten und in entsprechend schräger Ausrichtung geleiteten Laserstrahl (10) aufweisen und jeder Laserstrahldetektor (9) zur Weitergabe einer detektierten Laserstrahlunterbrechung mit der CNC-Steuerung verbunden ist.

8. Vorrichtung nach Anspruch 7, **dadurch gekennzeichnet, dass** eine parallel zur Achse des Schleifwerkzeuges (2) ausgerichtete Teilstrecke des Laserstrahls (10) vorgesehen ist.

9. Vorrichtung nach Anspruch 7 oder 8, **dadurch gekennzeichnet, dass** die zwei winklig angeordneten Laserstrahlstrecken Teilstrecken eines durch Spiegel (11) oder Strahlteiler (12) im Detektionsbereich V-förmig bzw. V-Stumpf-förmig umgelenkten Laserstrahls (10) sind.

10. Vorrichtung nach einem der Ansprüche 7 bis 9, **dadurch gekennzeichnet, dass** jede Teilstrecke einen eigenen Laserstrahldetektor (9) zur Detektion einer Unterbrechung des Laserstrahls (10) in diesem Bereich aufweist.

11. Vorrichtung nach Anspruch 8, **dadurch gekennzeichnet, dass** der Laserstrahl (10) zur Detektion in allen Teilstrecken durchgehend ausgebildet ist und nur ein Laserstrahldetektor (9) vorgesehen ist.

## Claims

1. Method for the automatic detection and/or compensation of inaccuracies of position, size and shape of a symmetrical grinding tool (2), and/or one which has a known geometry, and a workpiece (3) on a CNC-controlled grinding machine (1), with a detection head (4) connected to the CNC control and a measuring device (5), the detection head (4) having two obliquely aligned detection devices (7) enclosing an approximately triangular area and, for detecting the grinding tool (2), the detection head (4) detects the contact with at least one detection device (7) and the relative distance between the grinding tool (2) and the workpiece (3) is determined by moving the measuring device (5) between the workpiece (3) and the detection head (4), **characterised in that**, for detecting the grinding tool (2), the detection head (4) is moved towards the grinding tool (3) and/or the grinding tool (3) is moved towards the detection head (4) and the detection devices (7) use for the detection at least one laser beam (10) formed between a laser beam source (8) and a laser beam detector (9) and guided in appropriately oblique alignment, and an interruption of the laser beam (10) by the workpiece (3) is detected by the laser beam detector (9) and passed on to the CNC control.

2. Method according to claim 1, **characterised in that** a portion of the laser beam (10) is provided aligned parallel to the rotational axis of the grinding tool (2).

3. Method according to claim 1 or 2, **characterised in that** the two laser beam portions arranged at an angle are formed by a single laser beam (10) deflected in a V-shape or truncated V-shape by mirrors (11) or beam splitters (12) in the detection region.

4. Method according to one of claims 1 to 3, **characterised in that** for each portion of the laser beam (10), its own laser beam detector (9) detects an interruption of the laser beam (10) in this region.

5. Method according to claim 3, **characterised in that** a continuous laser beam (10) is used with only one laser beam detector (9) for detection in all the portions of the laser beam and the interrupted portion is determined in dependence on the movement leading to the interruption and the direction of movement.

6. Method according to one of claims 1 to 5, **characterised in that** the grinding tool (2) is rotated at a sufficiently high speed to compensate for any out-of-roundness and/or axial or radial run-out of the grinding tool (2) during the detection.

7. Device for the automatic detection and/or compensation of inaccuracies of position, size and shape of a symmetrical grinding tool (2), and/or one which has a known geometry, and a workpiece (3) on a CNC-controlled grinding machine (1), with a detection head (4), the output of which is connected to the CNC control, and a measuring device (5), the detection head (4) having two obliquely aligned detection devices (7) enclosing an approximately triangular area and being designed for detecting a contact with the grinding tool (2), and the measuring device (5) being designed moveable for determining the relative distance between the grinding tool (5) and workpiece (3), especially for carrying out the method according to claims 1 to 6, **characterised in that**, for detection, the detection devices (7) have a laser beam (10) formed between a laser beam source (8) and a laser beam detector (9) and guided in appropriately oblique alignment and each laser beam detector (9) is connected to the CNC control for reproducing a detected laser beam interruption.

8. Device according to claim 7, **characterised in that** a portion of the laser beam (10) is provided aligned parallel to the axis of the grinding tool (2).

9. Device according to claim 7 or 8, **characterised in that** the two laser beam portions arranged at an angle are portions of a single laser beam (10) deflected in a V-shape or truncated V-shape by mirrors (11) or beam splitters (12) in the detection region.

10. Device according to one of claims 7 to 9, **characterised in that** each laser beam portion has its own laser beam detector (9) for detecting an interruption of the laser beam (10) in this region.

11. Device according to claim 8, **characterised in that** the laser beam (10) is designed continuous for detection in all the portions and only one laser beam detector (9) is provided.

## Revendications

1. Procédé de détection et/ou compensation automatique d'imprécisions de position, de taille et de forme d'un outil de rectification (2) symétrique et/ou présentant une géométrie connue et d'une pièce (3) sur une rectifieuse (1) à commande numérique par calculateur (CNC), avec une tête de détection (4) reliée à la commande CNC et un dispositif de mesure (5), sachant que la tête de détection (4) présente deux dispositifs de détection (7) orientés obliquement et incluant une zone à peu près triangulaire et que pour détecter l'outil de rectification (2) la tête de détection (4) détecte le contact avec au moins un dispositif de détection (7) et que la distance relative entre outil de rectification (2) et pièce (3) est déterminée par déplacement du dispositif de mesure (5) entre la pièce (3) et la tête de détection (4), **caractérisé par le fait que** pour détecter l'outil de rectification (2) la tête de détection (4) est approchée de l'outil de rectification (2) et/ou l'outil de rectification (2) approché de la tête de détection (4) et que les dispositifs de détection (7) utilisent pour la détection au moins un rayon laser (10) établi entre une source de rayon laser (8) et un détecteur de rayon laser (9) et guidé dans une orientation oblique correspondante, et qu'une interruption du rayon laser (10) par la pièce (3) est détectée par le détecteur de rayon laser (9) et transmise à la commande CNC.

2. Procédé selon la revendication 1, **caractérisé par le fait qu'**il est prévu un trajet partiel du rayon laser (10) orienté parallèlement à l'axe de rotation de l'outil de rectification (2).

3. Procédé selon la revendication 1 ou 2, **caractérisé par le fait que** les deux trajets de rayon laser en angle sont formés par un unique rayon laser (10) dévié en V ou en V tronqué dans la zone de détection par des miroirs (11) ou des diviseurs de rayon (12).

4. Procédé selon l'une des revendications 1 à 3, **caractérisé par le fait que** pour chaque trajet partiel du rayon laser (10) un détecteur de rayon laser (9) séparé détecte une interruption du rayon laser (10) dans cette zone.

5. Procédé selon la revendication 3, **caractérisé par le fait que** l'on utilise un rayon laser (10) continu avec seulement un détecteur de rayon laser (9) pour la détection dans tous les trajets partiels du rayon laser et que le trajet partiel interrompu est déterminé en fonction du mouvement conduisant à l'interruption et du sens de mouvement.

6. Procédé selon l'une des revendications 1 à 5, **caractérisé par le fait que** l'outil de rectification (2) tourne à une vitesse suffisamment élevée pour compenser d'éventuelles ovalisations et/ou d'un voile axial ou vertical de l'outil de rectification (2) pendant la détection.

7. Dispositif pour la détection et/ou compensation automatique d'imprécisions de position, de taille et de forme d'un outil de rectification (2) symétrique et/ou présentant une géométrie connue et d'une pièce (3) sur une rectifieuse (1) à commande numérique par calculateur (CNC), avec une tête de détection (4) à commutation dont la sortie est reliée à la commande CNC et un dispositif de mesure (5), sachant que la tête de détection présente deux dispositifs de détection (7) orientés obliquement et incluant une zone à peu près triangulaire et est conçue pour détecter un contact avec l'outil de rectification (2) et que le dispositif de mesure (5) est conçu déplaçable pour déterminer la distance relative entre outil de rectification (2) et pièce (3), en particulier pour réaliser le procédé selon les revendications 1 à 6, **caractérisé par le fait que** les dispositifs de détection (7) présentent pour la détection un rayon laser (10) établi entre une source de rayon laser (8) et un détecteur de rayon laser (9) et guidé dans une orientation oblique correspondante et que chaque détecteur de rayon laser (9) est relié à la commande CNC pour la transmission d'une interruption de rayon laser détectée.

8. Dispositif selon la revendication 7, **caractérisé par le fait qu'**il est prévu un trajet partiel du rayon laser (10) orienté parallèlement à l'axe de l'outil de rectification (2).

9. Dispositif selon la revendication 7 ou 8, **caractérisé par le fait que** les deux trajets de rayon laser en angle sont des trajets partiels d'un rayon laser (10) dévié en V ou en V tronqué dans la zone de détection par des miroirs (11) ou des diviseurs de rayon (12).

10. Dispositif selon l'une des revendications 7 à 9, **caractérisé par le fait que** chaque trajet partiel présente un détecteur de rayon laser (9) séparé pour la détection d'une interruption du rayon laser (10) dans cette zone.

11. Dispositif selon la revendication 8, **caractérisé par le fait que** le rayon laser (10) est formé de façon continue dans tous les trajets partiels et qu'un seul détecteur de rayon laser (9) est prévu.
